# EUROPÄISCHE PATENTANMELDUNG

(11) **EP 0 939 184 A2**
(43) Veröffentlichungstag der Anmeldung: **01.09.1999**
(21) Anmeldenummer: 99100990.3
(22) Anmeldetag: 21.01.1999
(51) Int. Cl.: E04H 13/00

(54) **Vorrichtung zur Überprüfung der Standfestigkeit von Grabsteinen**

(30) Priorität: 27.02.1998 DE 19808308
(71) Anmelder: Frank, Heinrich, 61231 Bad Nauheim (DE)
(72) Erfinder: Frank, Heinrich, 61231 Bad Nauheim (DE)
(74) Vertreter: Schlagwein, Udo, Dipl.-Ing.

(57) **Zusammenfassung**

Bei einer Vorrichtung zur Überprüfung der Standfestigkeit von Grabsteinen wird die von einer Person aufzubringende Betätigungskraft (F_{B}) mittels eines Hebelarmes (6) auf einen Grabstein (5) übertragen. Diese Betätigungskraft (F_{B}) wird mittels einer Druckmesseinrichtung (8,17) erfasst und auf einem Display (11) angezeigt. Der Hebelarm (6) kann wahlweise horizontal mittels einer Halterung (3) an dem Grabstein (5) fixiert oder senkrecht gegen den Grabstein (5) angelehnt werden. Die erfindungsgemäße Vorrichtung (1) kann dadurch flexibel bei unterschiedlichen Grabsteinen (5) eingesetzt werden und ist zugleich problemlos in der Handhabung.

## Beschreibung

Die Erfindung betrifft eine Vorrichtung zur Überprüfung der Standfestigkeit von Grabsteinen, welche einen mittels einer Halterung horizontal am Grabstein zu befestigenden Hebelarm aufweist, der an seinem der Halterung gegenüberliegenden freien Ende zum Einleiten einer Betätigungskraft ausgebildet ist und dort eine Aufnahme mit einem Kraftaufnehmer hat und der zusätzlich mit einer ein Display aufweisenden Druckmesseinrichtung zur Erfassung der mittels des Hebelarmes auf den Grabstein übertragenen Betätigungskraft ausgestattet ist.

Eine solche Vorrichtung ist Gegenstand der DE 352 05 05. Diese Vorrichtung ist mittels der Halterung ähnlich eines Galgens horizontal an einem Grabstein zu befestigen. Hierzu hat die Halterung zwei Klemmeinrichtungen, die den Grabstein in seinem oberen und seinem unteren Abschnitt seitlich umgreifen. Die am freien Ende des Hebelarmes befestigte Druckmesseinrichtung hat eine Handhabe, mit der man bei Benutzung der Vorrichtung den am Grabstein horizontal befestigten Hebelarm nach oben drückt. Dadurch wird eine Prüfkraft auf den Grabstein übertragen. Diese Prüfkraft ist an der Druckmesseinrichtung unmittelbar ablesbar und kann zusätzlich auf einem Aufzeichnungsträger aufgezeichnet und dadurch dokumentiert werden.

Die genannte DE 352 05 05 zeigt auch schon eine Prüfvorrichtung mit einer stehenden Anordnung des die Kraft einleitenden Hebelarmes. Dabei stützt sich die Vorrichtung über ein aufwendiges Traggestell am Erdboden ab und wird mittels einer Klemmvorrichtung mit einer Seite des Grabsteines verbunden. Mittels des dann vertikal ausgerichteten Hebelarmes kann dann über ein aufwendig gestaltetes Getriebe eine Prüfkraft in den Grabstein eingeleitet werden. Gegenüber der Ausführungsform mit einem horizontal ausgerichteten Hebelarm hat diese Prüfvorrichtung den Vorteil, dass sie auch an Grabsteinen mit einem Kapitäl angebracht werden kann.

Nachteilig wirkt sich bei dem genannten Stand der Technik aus, dass für unterschiedliche Grabsteine sehr unterschiedlich gestaltete Vorrichtungen verwendet werden müssen. Deshalb ist es erforderlich, für die Durchführung von Standfestigkeitsprüfungen zwei relativ große Vorrichtungen zum Friedhof zu transportieren und dort je nach Gestaltung der Grabsteine einzusetzen, was hohen Aufwand bedingt und die Gefahr mit sich bringt, dass aus Bequemlichkeit die für einen bestimmten Grabstein nicht optimal geeignete Vorrichtung benutzt wird. Hinzu kommt, dass die Anbringung der jeweiligen Prüfvorrichtung an einem Grabstein zeitaufwendig ist, was dazu führt, dass eine Prüfmethode mit solchen Vorrichtungen zu teuer wird und deshalb in der Praxis keinen Eingang fand.

Der Erfindung liegt das Problem zugrunde, eine Vorrichtung zur Überprüfung der Standfestigkeit von Grabsteinen zu entwickeln, welche problemlos bei unterschiedlichen Grabsteinformen und Abmessungen flexibel einsetzbar ist und gleichzeitig bequem von dem Benutzer verwendet werden kann.

Dieses Problem wird erfindungsgemäß dadurch gelöst, dass der Hebelarm eine weitere Aufnahme für einen bei im Wesentlichen vertikal ausgerichtetem Hebelarm gegen den Grabstein anlegbaren Kraftaufnehmer besitzt.

Hierdurch wird es insbesondere möglich, die Vorrichtung wahlweise horizontal oder bei Grabsteinen mit einem oben aufgesetztes Kapitäl vertikal einzusetzen, indem man bei horizontaler Ausrichtung des Hebelarmes die Betätigungskraft über den Kraftaufnehmer am freien Ende in den Hebelarm einleitet oder bei vertikaler Ausrichtung des Hebelarmes unmittelbar am freie Ende des Hebelarmes die Betätigungskraft aufbringt und den Hebelarm über einen an der zweiten Aufnahme angebrachten Kraftaufnehmer in den Grabstein leitet. Dank der Erfindung genügt somit für sämtliche Grabsteine eine einzige Vorrichtung, die je nach Gestaltung des Grabsteines horizontal oder vertikal eingesetzt wird.

Eine vorteilhafte Weiterbildung der Erfindung besteht darin, dass die weitere Aufnahme auf einem in Richtung der Hebellängsachse verschieblichen Schlitten angeordnet ist. Hierdurch kann man den Kraftaufnehmer, welcher bei vertikaler Ausrichtung des Hebelarmes zum Einsatz kommt, durch Verschieben des Schlittens in einem weiten Maß über die Länge des Hebelarmes verstellen, so dass eine optimale Anpassung an unterschiedlich hohe Grabsteine möglich wird.

Die Vorrichtung ist besonders kostengünstig ausgebildet und hat ein geringes Gesamtgewicht, wenn die beiden Aufnahmen zur wahlweisen Befestigung des Kraftaufnehmers ausgebildet sind. Eine solche Ausführung gestattet das Umsetzen des Kraftaufnehmers je nach Ausrichtung des Hebelarmes, so dass nur ein Kraftaufnehmer erforderlich ist.

Eine andere Ausführungsform zeichnet sich dadurch aus, dass der Hebelarm an einem Ende einen Erddorn aufweist. Ein solcher Erddorn vermag in das Erdreich einzudringen und verhindert dadurch ein Wegwandern des unteren Endes des Hebelarmes bei Krafteinleitung. Ein Einsinken des unteren Endes in den Boden kann beispielsweise mittels einer Bodenplatte verhindert werden. Will man das untere Ende auf eine Grabplatte aufsetzen, dann kann man natürlich an dem Hebelarm Gummifüße, insbesondere Saugnäpfe, vorsehen.

Eine weitere vorteilhafte Weiterbildung der Erfindung wird erreicht, indem das Display in verschiedenen, einem Benutzer zugewandten Positionen fixierbar ist. Hierdurch wird zugleich die Anpassung der Position des Displays an die vertikale oder horizontale Ausrichtung der Vorrichtung und auch an verschiedene Körperstaturen ermöglicht, so dass das Display leicht abgelesen werden kann und dabei im ständigen Blickfeld der Person liegt. Die Person kann daher eine für sie bequeme Körperhaltung einnehmen, wodurch die Überprüfung vor allem bei dauerhafter Verwendung der Vorrichtung erheblich erleichtert wird.

Neben der Durchführung der Überprüfung ist zumeist auch deren Dokumentation erforderlich. Hierzu eignet sich eine Weiterbildung der Erfindung besonders gut, bei der die Druckmesseinrichtung mit einem elektronischen Speicherelement (Datenlogger) zum Aufzeichnen der maximal erzeugten Betätigungskraft verbunden ist. Die insbesondere bei schlechtem Wetter mühsame mechanische oder manuelle Erfassung der Daten durch die Person kann hierdurch entfallen, so dass im gleichen Zeitraum mehr Überprüfungen durchgeführt werden können. In der Praxis genügen für jede Überprüfung 1,5 Minuten pro Grabstein. Dabei können in dem Speicherelement weitere Daten abgelegt sein. Diese werden bereits vor Durchführung der Überprüfung eingegeben und stehen so beispielsweise als Datenbank zur Verfügung. Die gewünschten Daten lassen sich bei Bedarf schnell vor Ort abrufen. Zusätzlich kann die Druckmesseinrichtung mit einem Anschluss für einen Drucker ausgestattet sein, so dass die ermittelten Daten problemlos und schnell in Form eines Berichtes ausgedruckt werden können. Ferner kann auch die erfasste Außentemperatur in dem Speicherelement abgelegt werden und so in die spätere Auswertung einfließen.

Eine besonders vorteilhafte Weiterbildung der Erfindung wird dadurch erreicht, dass der Hebelarm einen Überlastschutz besitzt. Denjenigen Personen gegenüber, welche die Überprüfung durchführen, wird oftmals der Vorwurf erhoben, durch unsachgemäße Durchführung mit überhöhtem Krafteinsatz den Grabstein beschädigt oder gelockert zu haben. Dies kann durch den Überlastschutz zuverlässig verhindert werden. Beispielsweise dient hierzu ein Alarmsignal, welches bei Überschreiten einer einstellbaren Maximalgrenze ausgelöst wird. Es sind aber auch mechanische Ausführungsformen des Überlastschutzes denkbar, welche beispielsweise ein mittels Federkraft vorgespanntes Gelenk an dem Hebelarm aufweisen, welches nach Art eines Drehmomentschlüssels bei Überlastung ausrastet, so dass eine eingestellte Kraft nicht überschritten werden kann.

Es wäre möglich, dass die Person die Druckmesseinrichtung am Hebelarm direkt umgreift. Ergonomisch günstiger ist es jedoch, wenn gemäß einer vorteilhaften Ausführungsform der Erfindung der Hebelarm zur Betätigung der Druckmesseinrichtung eine im Wesentlichen quer zu seiner Längsachse verlaufende Griffstange besitzt. Dadurch kann die Person die Griffstange mit beiden Händen greifen und so auch mühelos große Betätigungskräfte aufbringen, ohne dabei die Druckmesseinrichtung unmittelbar zu berühren. Die Griffstange kann dabei an einem Schlitten quer zur Längsachse des Hebelarmes verschieblich ausgeführt sein, um so mögliche Messfehler, die aus einer ungleichmäßigen Belastung der Druckmesseinrichtung resultieren, zu verhindern. Insbesondere ist das Verklemmen oder Verkeilen der Druckmesseinrichtung oder des Kraftaufnehmers ausgeschlossen.

Vorteilhaft ist es auch, wenn gemäß einer anderen Weiterbildung der Erfindung der Hebelarm lösbar mit der Halterung verbunden ist. Bei einer solchen Ausführungsform kann man zunächst die Halterung am Grabstein befestigen und anschließend den die Druckmesseinrichtung aufweisenden Hebelarm mit der Halterung verbinden. Dadurch wird die Handhabung dieser Bauteile wesentlich erleichtert. Zugleich können mehrere baugleiche oder geringfügig abgewandelte Halterungen abwechselnd verwendet werden, so dass eine zweite Person eine freie Halterung bereits am nächsten Grabstein befestigen kann, während die erste Person noch die Prüfung eines anderen Grabsteines durchführt. Zugleich können spezielle Halterungen für individuelle Einsatzzwecke mit der Vorrichtung verbunden werden und so der Einsatzbereich erweitert werden.

Dabei ist eine besonders einfache Weiterbildung der Erfindung dadurch gegeben, dass die Halterung ein Fixiermittel aufweist, mit dem die Halterung zugleich an dem Hebelarm und an dem Grabstein fixierbar ist. Hierdurch lässt sich der Einsatz der Vorrichtung deutlich vereinfachen. Dabei wird die Halterung beispielsweise zunächst an dem Grabstein angeordnet und mit einer geringen Vorspannkraft gegen Verrutschen gesichert. Nach dem anschließenden Aufsetzen des Hebelarmes wird die Spannkraft des Fixiermittels erhöht, wobei die Halterung zugleich gegenüber dem Hebelarm und dem Grabstein verspannt wird, ohne dass hierzu zusätzliche Verschraubungen betätigt werden müssen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine seitliche Ansicht der erfindungsgemäßen Vorrichtung in horizontaler, an einem Grabstein befestigter Ausrichtung,
- Fig.2: die in Figur 1 dargestellte Vorrichtung in vertikaler, gegen einen Grabstein anliegender Ausrichtung,
- Fig.3: eine Seitenansicht einer weiteren Ausführungsform der erfindungsgemäßen Vorrichtung,
- Fig.4: die in Figur 3 dargestellte Vorrichtung in Draufsicht,
- Fig.5: einen vorderen Abschnitt der in den Figuren 3 und 4 dargestellten Vorrichtung in Vordersicht,
- Fig.6: eine abgewandelte Ausführungsform einer Halterung in Seitenansicht.

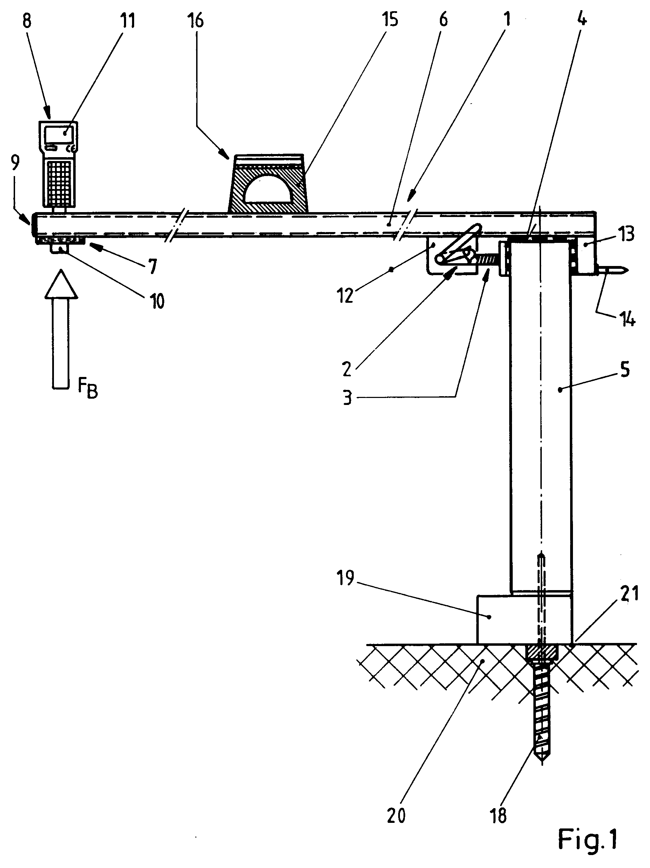

Die Figur 1 zeigt in einer seitlichen Ansicht eine erfindungsgemäße Vorrichtung 1, die mittels einer mit einem Kniehebelverschluss 2 versehenen Halterung 3 an einer oberen Kante 4 eines Grabsteins 5 befestigt ist. Die Halterung 3 kann auch als übliche Zwinge oder gänzlich anders als dargestellt ausgebildet sein. Sie muss es lediglich ermöglichen, die Vorrichtung am Grabstein 5 lösbar zu befestigen. Die Vorrichtung 1 weist einen Hebelarm 6 auf, an dessen freiem Ende eine Aufnahme 7 mit einem darin lösbar befestigten Kraftaufnehmer 10 vorgesehen ist. Dieser Kraftaufnehmer 10 ist elektrisch mit einer ein Display 11 aufweisenden Druckmesseinrichtung 8 verbunden und kann von einer nach oben gerichteten Betätigungskraft F_{B} belastet werden.

Die Halterung 3 ist mittels eines Schiebers 12 verschieblich am Hebelarm 6 befestigt. An der Seite der Halterung 3 hat der Hebelarm 6 eine Bodenplatte 13, aus der ein Erddorn 14 herausragt. Der Hebelarm 6 weist zwischen dem freien Ende 9 und dem die Halterung 3 aufweisenden Ende eine weitere, auf einem Schlitten 15 verschiebbare Aufnahme 16 auf. Der Kraftaufnehmer 10 kann wahlweise statt in der Aufnahme 7 in die Aufnehme 16 des Schlittens 15 eingesetzt werden. Der Grabstein 5 ist mittels eines Bodenankers 18 mit einem Sockel 19 und dem darunter befindlichen Erdreich 20 verbunden, so dass die auf den Hebelarm 6 aufgebrachte Betätigungskraft F_{B} auf die hintere untere Sockelkante 21 übertragen wird.

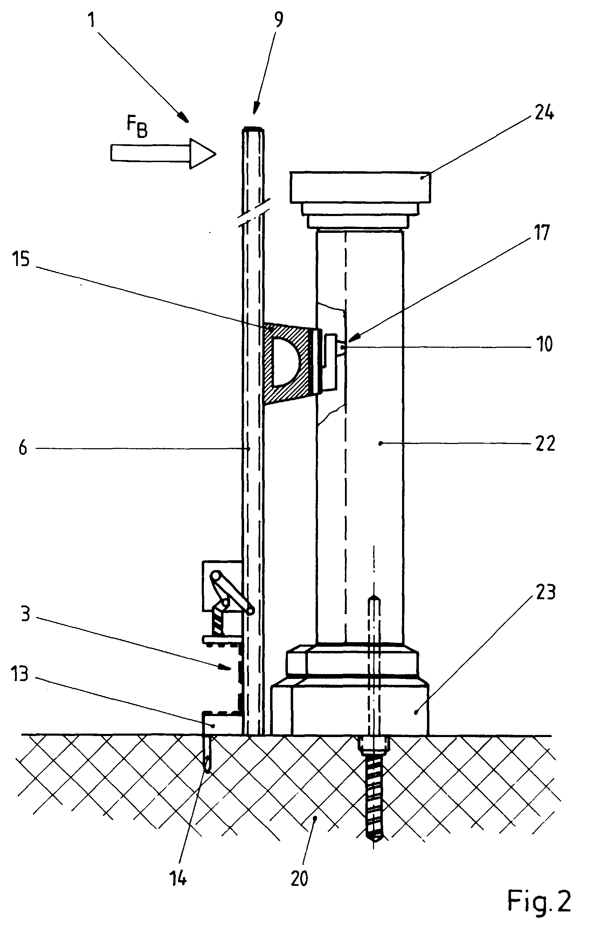

Figur 2 zeigt die in Figur 1 dargestellte Vorrichtung 1 in einer vertikalen Ausrichtung. Hierzu wurde der Kraftaufnehmer 10 umgesetzt und befindet sich jetzt in der Aufnahme 16 des Schlittens 15. Der Kraftaufnehmer 10 liegt gegen die Vorderseite eines Grabsteins 22 an. Der Grabstein 22 ist mit einem Sockel 23 verbunden und besitzt ein oben aufgesetztes Kapitäl 24, wodurch die Befestigung des Hebelarmes 6 an dem Grabstein 22 mittels der Halterung 3 ausgeschlossen ist. Das freie Ende 9 des Hebelarmes 6 ist hierbei mit der bei dieser Anordnung horizontal angreifenden Betätigungskraft F_{B} belastet, wobei die auf dem Erdreich 20 aufliegende Bodenplatte 13 mit dem Erddorn 14 ein Widerlager für die Betätigungskraft F_{B} bildet.

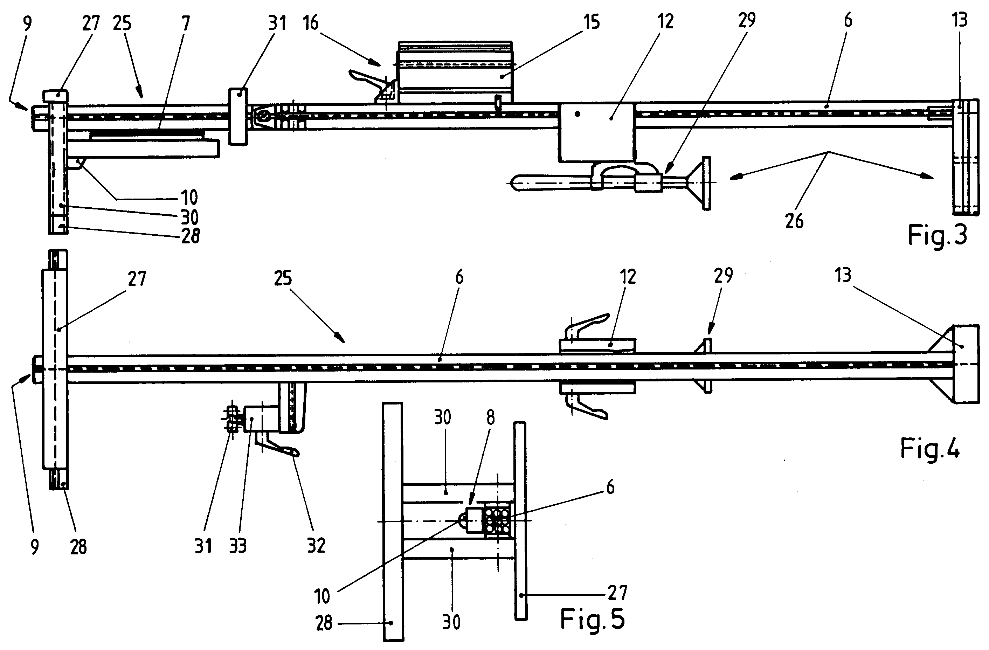

Figur 3 zeigt eine andere Ausführungsform einer erfindungsgemäßen Vorrichtung 25, welche sich von der in den Figuren 1 und 2 dargestellten Vorrichtung 1 im Wesentlichen durch eine andere Ausführung der Halterung 26 und durch zwei zusätzliche Griffstangen 27 und 28 unterscheidet. Übereinstimmende Bauteile sind daher mit gleichen Bezugszeichen versehen. Die Halterung 26 ist bei dieser Ausführung durch eine Schraubzwinge 29 gebildet, welche mittels des Schlittens 12 voreinstellbar ist. Ein nicht dargestellter Grabstein wird mittels der Schraubzwinge 29 gegen die Bodenplatte 13 gepresst, wodurch eine kraftschlüssige Verbindung zwischen der Vorrichtung 25 und dem nicht dargestellten Grabstein erreicht werden kann. An dem freien Ende 9 sind die beiden mittels eines vertikalen Schlittens 30 längs verschieblichen Griffstangen 27 und 28 angeordnet, zwischen denen der Kraftaufnehmer 10 der Druckmesseinrichtung 8 angeordnet ist. Unter dem Einfluss der nach oben gerichteten Betätigungskraft F_{B} liegt daher die untere Griffstange 28 gegen den an der Aufnahme 7 angeordneten Kraftaufnehmer 10 an, der den Wert der Betätigungskraft F_{B} erfasst. Der Kraftaufnehmer 10 kann wahlweise auch auf die Oberseite des Hebelarmes 6 montiert werden. Dann kann man mittels der Griffstangen 26 oder 27 zur Standfestigkeitsprüfung eine nach unten gerichtete Kraft in den Hebelarm 6 einleiten.

Das Gleiche lässt sich ohne Umsetzmöglichkeit des Kraftaufnehmers 10 erreichen, wenn das Ende mit dem Schlitten 30 und dem Kraftaufnehmer 10 um eine in Längsrichtung des Hebelarmes 6 verlaufende Schwenkachse verdrehbar mit dem Hebelarm 6 verbunden wird.

Wie schon zuvor beschrieben, ist der Kraftaufnehmer 10 zusätzlich zur vertikalen Ausrichtung des Hebelarmes 6 in die in etwa mittig auf dem Hebelarm 6 und mittels des Schlittens 15 verschiebbar angeordnete Aufnahme 16 umsetzbar. Der Hebelarm 6 besitzt weiterhin eine gelenkig angebrachte Befestigung 31 für die in Figur 1 gezeigte Druckmesseinrichtung 8 mit dem Display 11, welche in verschiedenen Positionen fixierbar ist.

Figur 4 zeigt die in Figur 3 dargestellte Vorrichtung 25 in einer teilweise geschnittenen Draufsicht, wobei die Aufnahme 16 und der Schlitten 15 nicht dargestellt sind. An dem freien Ende 9 trägt der Hebelarm 6 die beiden Griffstangen 27 und 28, wobei die obere Griffstange 27 aus ergonomischen Gründen geringfügig kürzer ausgeführt ist. Weiterhin ist die Befestigung 31 für die Druckmesseinrichtung 8 erkennbar, welche mittels eines mit einem Hebel 32 versehenen Gelenkes 33 in verschiedenen Positionen fixierbar ist. An einem dem freien Ende 9 gegenüberliegenden Ende des Hebelarmes 6 befindet sich die Bodenplatte 13, gegen die ein nicht dargestellter Grabstein mittels der an dem Schieber 12 verschieblichen Schraubzwinge 29 anpressbar ist.

Figur 5 zeigt die in den Figuren 3 und 4 dargestellten Griffstangen 27 und 28, welche mittels des zweiteilig ausgeführten Schlittens 30 miteinander verbunden sind. Dieser Schlitten 30 ermöglicht gegenüber dem geschnitten dargestellten Hebelarm 6 eine vertikale Verschiebbarkeit. Eine nach oben gerichtete Betätigungskraft F_{B} bewirkt daher aus der dargestellten Ruhelage heraus eine Verschiebung des Schlittens 30, bis die untere Griffstange 28 gegen den mit dem Hebelarm 6 verbundenen Kraftaufnehmer 10 der Druckmesseinrichtung 8 anliegt.

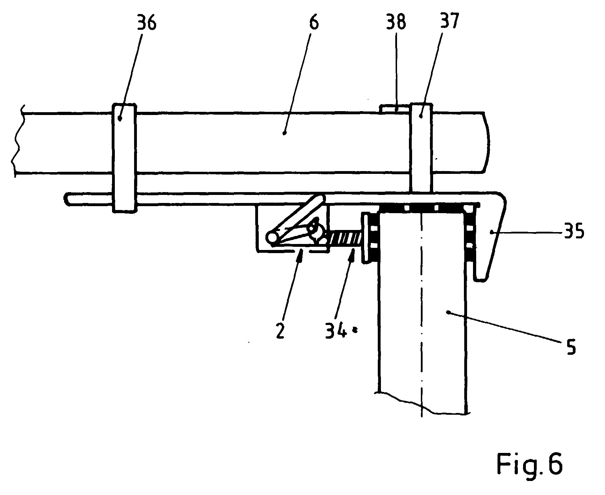

Die Figur 6 zeigt eine Halterung 34, welche lösbar mit dem Hebelarm 6 verbunden ist. Eine solche Ausführungsform ermöglicht es, zunächst die Halterung 34 am Grabstein zu befestigen und erst dann den Hebelarm 6 an diese Halterung 34 anzuschließen. Dadurch wird die Handhabung der Vorrichtung wesentlich erleichtert.

Wie Figur 6 zeigt, ist bei der Halterung 34 der Kniehebelverschluss 2 an einem den lediglich abschnittsweise dargestellten Grabstein 5 umgreifenden Bügel 35 verstellbar angeordnet. Der Kniehebelverschluss 2 wird hierzu lediglich mit einer geringen Vorspannkraft gegenüber dem Grabstein 5 gespannt, so dass die Halterung 3 gegen unbeabsichtigtes Verrutschen gesichert ist. Zweckmäßigerweise hat der Kniehebelverschluss 2 hierzu mehrere Raststufen. Anschließend wird die Halterung 34 mit dem Hebelarm 6 verbunden. Hierzu dienen zwei Fixiermittel 36, 37. Das Fixiermittel 36 ist hierzu mit dem Hebelarm 6 und das Fixiermittel 37 mit dem Bügel 35 fest verbundene, so dass eine einfache Verbindung durch Aufstecken des Hebelarmes 6 auf den Bügel 35 erreicht wird. Ein an dem Hebelarm 6 angeordneter einstellbarer Anschlag 38 stellt dabei einen gleichbleibenden axialen Abstand zwischen dem Grabstein 5 und dem Hebelarm 6 sicher. Nach der so erfolgten noch nicht fixierten Verbindung zwischen Halterung 3 und dem Hebelarm 6 wird der Kniehebelverschluss 2 erneut betätigt und mit wesentlich höherer Kraft belastet. Hierdurch werden auf den Bügel 35 Biegekräfte aufgebracht, die ein Verspannen des Bügels 35 gegenüber den Fixiermitteln 36, 37 bewirkt. Der Hebelarm 6 kann daher in diesem Zustand nicht von der Halterung 3 gelöst werden.

### Bezugszeichenliste

- 1: Vorrichtung
- 2: Kniehebelverschluss
- 3: Halterung
- 4: obere Kante
- 5: Grabstein
- 6: Hebelarm
- 7: Aufnahme
- 8: Druckmesseinrichtung
- 9: freies Ende
- 10: Kraftaufnehmer
- 11: Display
- 12: Schieber
- 13: Bodenplatte
- 14: Erddorn
- 15: Schlitten
- 16: Aufnahme
- 18: Bodenanker
- 19: Sockel
- 20: Erdreich
- 21: Sockelkante
- 22: Grabstein
- 23: Sockel
- 24: Kapitäl
- 25: Vorrichtung
- 26: Halterung
- 27: Griffstange
- 28: Griffstange
- 29: Schraubzwinge
- 30: Schlitten
- 31: Befestigung
- 32: Hebel
- 33: Gelenk
- 34: Halterung
- 35: Bügel
- 36: Fixiermittel
- 37: Fixiermittel
- 38: Anschlag
- F_{B}: Betätigungskraft

## Patentansprüche

1. Vorrichtung zur Überprüfung der Standfestigkeit von Grabsteinen, welche einen mittels einer Halterung horizontal am Grabstein zu befestigenden Hebelarm aufweist, der an seinem der Halterung gegenüberliegenden freien Ende zum Einleiten einer Betätigungskraft ausgebildet ist und dort eine Aufnahme mit einem Kraftaufnehmer hat und der zusätzlich mit einer ein Display aufweisenden Druckmesseinrichtung zur Erfassung der mittels des Hebelarmes auf den Grabstein übertragenen Betätigungskraft ausgestattet ist, **dadurch gekennzeichnet**, dass der Hebelarm (6) eine weitere Aufnahme (16) für einen bei im Wesentlichen vertikal ausgerichtetem Hebelarm (6) gegen den Grabstein (5, 22) anlegbaren Kraftaufnehmer (10) besitzt.

2. Vorrichtung nach Anspruch 1, **dadurch gekennzeichnet**, dass die weitere Aufnahme (16) auf einem in Richtung der Hebellängsachse verschieblichen Schlitten (15) angeordnet ist.

3. Vorrichtung nach den Ansprüchen 1 oder 2, **dadurch gekennzeichnet**, dass die Aufnahmen (7, 16) zur wahlweisen Befestigung des Kraftaufnehmers (10) ausgebildet sind.

4. Vorrichtung nach zumindest einem der vorangehenden Ansprüche, **dadurch gekennzeichnet**, dass der Hebelarm (6) an einem Ende einen Erddorn (14) aufweist.

5. Vorrichtung nach zumindest einem der vorangehenden Ansprüche, **dadurch gekennzeichnet**, dass das Display (11) in verschiedenen, einem Benutzer zugewandten Positionen fixierbar ist.

6. Vorrichtung nach zumindest einem der vorangehenden Ansprüche, **dadurch gekennzeichnet**, dass die Druckmesseinrichtung (8, 17) mit einem elektronischen Speicherelement zum Aufzeichnen der maximal erzeugten Betätigungskraft (F_{B}) verbunden ist.

7. Vorrichtung nach zumindest einem der vorangehenden Ansprüche, **dadurch gekennzeichnet**, dass der Hebelarm (6) einen Überlastschutz besitzt.

8. Vorrichtung nach zumindest einem der vorangehenden Ansprüche, **dadurch gekennzeichnet**, dass der Hebelarm (6) zur Betätigung des Kraftaufnehmers (10) eine im Wesentlichen quer zu seiner Längsachse verlaufende Griffstange (27, 28) besitzt.

9. Vorrichtung nach zumindest einem der vorangehenden Ansprüche, **dadurch gekennzeichnet**, dass der Hebelarm (6) lösbar mit der Halterung (3, 34) verbunden ist.

10. Vorrichtung nach zumindest einem der vorangehenden Ansprüche, **dadurch gekennzeichnet**, dass die Halterung (3, 34) ein Fixiermittel (36, 37) aufweist, mit dem die Halterung (3, 34) zugleich an dem Hebelarm (6) und an dem Grabstein (5, 22) fixierbar ist.
